# EUROPEAN PATENT SPECIFICATION

(11) **EP 1 573 964 B1**
(45) Date of publication and mention of the grant of the patent: **21.06.2006**
(21) Application number: 03814189.1
(22) Date of filing: 17.12.2003
(51) Int. Cl.: H04L 12/24

(54) **METHOD OF GUARANTEED DELIVERY OF SNMP TRAPS ACROSS A WIDE AREA NETWORK**
VERFAHREN ZUR GARANTIERTEN ABLIEFERUNG VON SNMP-TRAPS ÜBER EIN GROSSFLÄCHIGES NETZWERK
PROCEDE PERMETTANT DE GARANTIR LA LIVRAISON D'EVENEMENTS SNMP DANS UN RESEAU ETENDU

(30) Priority: 20.12.2002 US 325642
(43) Date of publication of application: 14.09.2005
(73) Proprietor: ELECTRONIC DATA SYSTEMS CORPORATION, Plano, TX 75024 (US)
(72) Inventor: GIBSON, Edward, S., Allen, TX 75002 (US); REAMES, Sterling, C., Frisco, TX 75034 (US); WRIGHT, Dale, R., Frisco, TX 75034 (US)
(74) Representative: Lawrence, John
(86) International application number: PCT/US2003/040507
(87) International publication number: WO 2004/059908

(56) References cited:
- EP-A- 0 991 229
- US-A1- 2002 057 018
- US-A1- 2002 161 883
- US-B1- 6 253 243
- RANDHAWA T S ET AL: "Over-the-air management of multi-mode mobile hosts using SNMP" IEEE CONFERENCE PROCEEDINGS ARTICLE, 29 October 2002 (2002-10-29), pages 189-193, XP010611970

## Description

### TECHNICAL FIELD

The present invention relates to network administration, and more particularly, to a method and system for guaranteeing the delivery of network monitoring messages, such as SNMP Traps across a wide area network.

### BACKGROUND INFORMATION

Network monitoring protocols such as, for example, the Simplified Network Management Protocol (SNMP), specify the use of TCP/IP datagrams as the communications protocol to be used for sending of Traps. Traps are usually emitted by monitored agents on a computer network to automatically send an alarm for certain network events, as shall be described more fully below. As is known in the art, a datagram is a message conforming to the User Datagram Protocol or ("UDP") and a Trap is the specific name for a message sent in compliance with the SNMP protocol. Thus, in network administration and monitoring, one of the ubiquitous tasks is the collection and monitoring of Traps from the various agents or objects which are connected to the network.

Conventional network monitoring protocols such as SNMP generally do not provide any mechanism for assuring the delivery of Traps from the issuing computing equipment to the intended target. This is for a simple reason. The SNMP protocol specifies that Traps are sent as UDP datagrams. UDP datagrams are not guaranteed as to delivery. While the User Datagram Protocol gives application programs direct access to a datagram delivery service, which allows applications to exchange messages over the network with a minimum of protocol overhead, UDP datagrams have a defect. UDP is an unreliable, connectionless datagram protocol. In this context, "unreliable" merely means that there are no techniques in the protocol for verifying that the data reached the other end of the network correctly. Within a given computer, UDP will deliver data correctly. However, if a remote agent being monitored on the network is programmed to output UDP datagrams as Traps in compliance with SNMP when there is a problem or failure of some kind, and those Traps are not received across a wide area network by the monitoring application, there is no way to tell the difference between (i) whether there was no failure, and therefore no Traps were sent, or (ii) whether there was a failure, Traps were sent, but Traps due to network conditions were never received.

Notwithstanding these issues, application programmers in general choose UDP as a data transport service for Traps for several reasons. For example, if the amount of data being transmitted is small, the overhead of creating connections and insuring reliable delivery may be greater in the work of retransmitting the entire dataset. In this case, UDP is the most efficient choice for transport layer protocol. Of course, there is the defect that there is no guarantee of delivery but, given the tradeoffs involved, conventional systems have put up with the inherent defects of UDP and its specified use in SNMP.

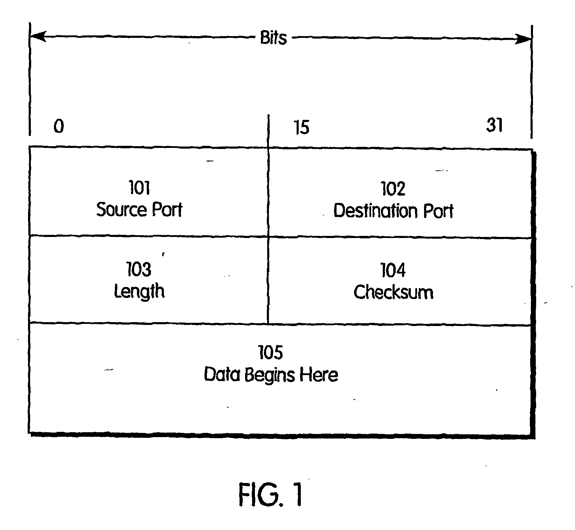

Figure 1 depicts the UDP message format. With reference thereto, it can easily be seen how the convenience of using UDP datagrams derives from its structure. The entire overhead is eight bytes comprising a source port 101 occupying two bytes, a destination port 102 occupying two bytes, a link field 103 occupying two bytes, and a check sum field 104 occupying two bytes. Beyond that, all that is included in a UDP datagram is the data 105. Obviously, given this structure a UDP datagram has no mechanism for any handshaking or confirmation of receipt, as is commonly found in other, more complicated data structures such as the TCP segment.

Thus, when the monitored computing equipment is close to the monitoring systems, the unreliability of UDP is of little concern due to the reliability of close-run networks. Most Traps issued by computing equipment within a local area network will be received by a monitoring device connected to that local area network. When there is a need to monitor computing equipment that is separated by long network distances; however, such as are common across a wide area network ("WAN"), then the reliability of UDP becomes a significant issue.

Conventional solutions to this problem fall into two major types. One type simply forwards the receiving SNMP Traps to one or more destinations. No assured delivery mechanisms are provided in this solution. A second type is a more complex one that transforms the incoming SNMP Traps into non-standards-based datastreams at the remote site. Complex solutions of this type may or may not provide assured delivery, inasmuch as they may not provide for queuing of received SNMP Traps if a transmission channel to their destination is unavailable. In such contexts, if an SNMP Trap is not immediately forwardable, it is lost. Moreover, such complex solutions transform the SNMP Traps into formats which can only be decoded by a given proprietary Trap processor, such as a Tivoli Trap processor or other competing device as may be known in the art. Thus, while such complex commercial solutions do provide guaranteed delivery of the original SNMP Traps, they make it impossible to change the targeted Trap processor from the device associated with such commercial solution. In essence they are offering guaranteed delivery as a tie in to the use of their particular Trap processor. This severely limits the flexibility of a network administrator in switching to a different Trap processing device in the first instance, and in the second instance requires the network to use one proprietary Trap processing device throughout the network or risk having to continually make sure that a given Trap source is targeting a Trap processor which can ultimately decode the nonstandard-based datastream into which the original Traps are transformed.

Management of network device using a management client over a network is disclosed in EP-A-0 99 229 (CANNON KK). The management client contains information from the managed device pertaining to the presence and identity of multiple different protocol stacks.

What is therefore needed in the art is a means of guaranteeing the delivery of SNMP Traps across networks where assumptions as to high confidence of receiving SNMP Traps sent as UDP datagrams are no longer valid. Such a solution would not only remove the uncertainties associated with network administration using SNMP, but it would also increase the distance from monitoring applications at which monitored computing equipment could reliably be placed and still be effectively monitored.

### SUMMARY OF THE INVENTION

According to the invention there is provided a method of guaranteeing the delivery of SNMP traps in a network, comprising: receiving at least two SNMP traps at a trap concentrator; characterised in that the method further includes bundling the SNMP traps using a guaranteed delivery data transmission protocol; transmitting the bundled traps to a trap echoer; and
unbundling the traps and transmitting their data content to a trap processor.

A system and method of guaranteeing delivery of SNMP Traps in a computer network is provided according to exemplary embodiments of the present invention. In an exemplary embodiment, the method receives SNMP Traps at a Trap concentrator, which bundles the Traps using a guaranteed delivery data transmission protocol. The Trap concentrator further transmits the bundled Traps across a network to a Trap echoer, which unbundles the Traps and transmits their data content to a Trap processor. In exemplary embodiments, the Trap concentrator recognizes if attempted Trap transmission to the Trap echoer fails, and if so, stores the bundled Traps in a cache until they can be retransmitted in their original sequence.

### BRIEF DESCRIPTION OF THE DRAWINGS

Fig. 1 illustrates the format of an exemplary UDP datagram;

Fig. 2 is an exemplary network diagram according to an embodiment of the present invention;

Fig. 3 depicts an exemplary modular software program implementing a Trap Concentrator according to an embodiment of the present invention;

Fig. 4 depicts an exemplary modular software program implementing a Trap Echoer according to an embodiment of the present invention; and

Fig. 5 depicts an exemplary utilization of the methods according to an embodiment of the present invention.

### DETAILED DESCRIPTION

The present invention facilitates the centralized monitoring of computing equipment in a SNMP Trap-enabled network. The term "computing equipment" as used herein is not limited to desktop or server computing platforms but would also include, for example, network switches such as those manufactured by, for example, Cisco Systems, Alcatel, and others, fiber optic switches such as, for example, McData, Brocade, etc., as well as C storage equipment, such as, for example, the equipment manufactured by EMC, Hitachi, and others. As well, any other network-enabled equipment that emits SNMP Traps could be included as a Trap source for the purposes of the present invention.

It is understood that while the present invention is described in terms of SNMP Traps as the non-guaranteed monitoring data, the content of which is transformed prior to transmission over a wide area network to a guaranteed protocol, in general the method and systems of the present invention apply to any type of message sent in a network by various objects or agents connected to the network where such messages are in a non-guaranteed format. The description herein in terms of an SNMP enabled network where the monitored computing equipment emits SNMP Traps is by way of example and illustration only and is not intended to limit in any way the method and/or systems of the present invention.

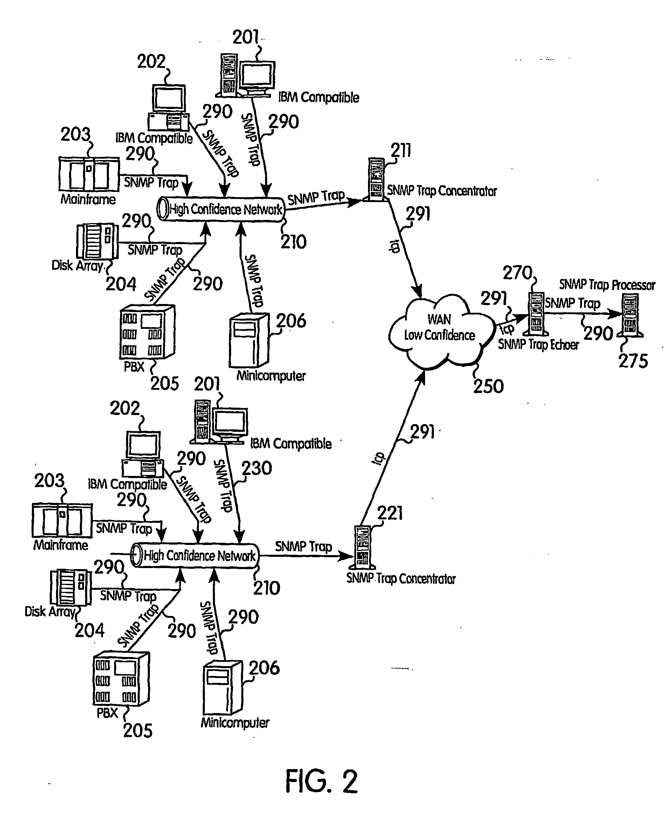

The method and system of the present invention will next be described with reference to Fig. 2. Fig. 2 is an overall diagram of an exemplary network. On the left of Fig. 2, there are two high confidence networks 210 and 220, respectively. Each of the high confidence networks is, for example, a local area network where all of the connected pieces of computing equipment are in close proximity, either literally or virtually.

Close proximity, as used herein and understood in the art, refers to networks in which the number of hops are sufficiently low and the congestion at each router is sufficiently low so as to give a network administrator a high degree of confidence that a message sent using a protocol which does not guarantee delivery, such as, for example, a UDP datagram which used to transmit an SNMP Trap, will reach its destination. In general, since there is no guarantee of delivery of an SNMP Trap, whether it gets through or not will be a function of the number of hops it must take between its origin and its targeted destination, as well as the congestion of each of those hops. A multi-hop route where congestion is minimal or nil, e.g., where the routers at each of the hops have plenty of excess capacity and are not utilized to their full capacity, has a high confidence of reaching its destination. On the other hand, a short hop of even only one or two routers but where there is high congestion has a very low degree of confidence that a non-guaranteed UDP datagram such as an SNMP Trap will reach its destination.

Thus, for purposes of this discussion, as well as the discussion of the system components of Fig. 2, a high confidence network is one which is generally a local area network but may include wider distances with multiple hops where congestion is sufficiently low to provide high confidence of arrival.

As can be seen with reference to Fig. 2, within each high confidence network, monitoring messages are sent as SNMP Traps. Thus, in high confidence network 210, the network connected computing equipment 201 through 206, which includes, for example, IBM PCs, mainframe computers, disk arrays, private branch exchanges and mini computers, respectively, send SNMP Traps across the high confidence networks. The same situation prevails in high confidence network 220 where similar equipment 201 through 206 is connected to high confidence network 220 and uses SNMP Traps as its medium of monitoring messaging and status of equipment connected to the network.

Continuing with reference to Fig. 2, high confidence network 210, high confidence network 220, and the SNMP Trap Echoer 270 are all connected via, for example, a low confidence conventional wide area network 250. As described above, a low confidence network implies that messages which do not have some mechanism for guaranteeing delivery in all likelihood will not reach their intended target.

An exemplary method of the present invention provides for assured delivery from the equipment in local networks 210 and 220 to the remote network where SNMP Traps are processed by SNMP managers such as the SNMP Trap Echoer 270 and the SNMP Trap processor 275. This method reduces, for example, the dependency on vendor products for delivery of event management Traps into event management systems. An additional advantage of the present invention is the ability to change the central event management processor without having to change the monitoring equipment, as shall be described more fully below.

A further advantage offered by the system and method of the present invention is a reduction in the amount of distributed administration that must occur to be able to process the SNMP Traps. Generally, a Trap receiver must be provided details regarding the format of the received Traps. The exemplary embodiments of the present invention, besides guaranteeing the delivery of such Traps, further limits the systems that need the intimate SNMP Trap knowledge to a central SNMP Trap processor 275. Thus, the system and method of the present invention not only offer guaranteed monitoring messaging, but also offer centralization of network monitoring, where the network can be in actuality a series of multiple networks all connected via a low confidence wide area network. Embodiments of the present invention thus can apply to centralized monitoring of distributed computing equipment across the globe connected by one or more wide area networks such as, for example the Internet, or a variety of virtual private networks ("VPNs").

Continuing with reference to Fig. 2, general flow of network monitoring messaging will next be described. The general flow involves the targeting of SNMP Traps 290 emitted by any SNMP compliant network component, such as, for example, 201 through 206, to an SNMP Trap Concentrator 211, 221. The SNMP Trap Concentrator 211, 221 accepts all incoming Traps from the local area network/high confidence network to which it is connected and can do at least one of two things. First, each SNMP Trap 290 is bundled for transport to SNMP Trap Echoer 270. Next, if the network connection to the SNMP Trap Echoer 270 is in place (this connection is, for example, across a low confidence WAN 250), the bundled Traps are sent to the SNMP Trap Echoer 270. This can be accomplished as follows. In exemplary embodiments, the data payload of a UDP datagram is captured as an array of bytes. These bytes can be encapsulated in an object that identifies the sending concentrator or site and specifies the length of the data bytes represented in the byte array. As well, in preferred exemplary embodiments, time stamps and/or other additional data could be included in the encapsulating object to provide more context for the datagram data.

Alternatively, if the network connection to the SNMP Trap Echoer 270 is not in place, the bundled SNMP Trap 290 is stored locally at each SNMP Trap Concentrator 211, 221, to be delivered when next possible. Thus, in the case where SNMP Traps 290 have been stored locally at SNMP Trap Concentrators 211, 221, the SNMP Trap Concentrators 211, 221 will send such Traps to the SNMP Trap Echoer 270 when network connectivity has been reestablished. Moreover, once communications are restored between the SNMP Trap Concentrators 211, 221 and the SNMP Trap Echoer 270, any Traps which were queued, as above, are sent in the order received. This is done so as not to affect the ability of a Trap processor to imply corrected situations based on the order of incoming events. For example, if two Traps are sent by a given network object, a first one signaling a power failure and a second signaling its resolution, and both are queued by an SNMP Trap Concentrator and then later sent, as described above, to a Trap echoer, a Trap processor downline must see these Traps in their proper sequence, or it will assume that the power is still down on the network object when in actuality the problem has been resolved.

As well, in exemplary embodiments of the present invention, multiple SNMP Trap Echoers may be targeted by a given SNMP Trap Concentrator as a kind of redundancy protection. Thus, if a connection to one SNMP Trap Echoer 270 is not available, the SNMP Trap Concentrator 211, 221 will try the next available SNMP Trap Echoer 270 on its list.

One method of implementing such redundancy protection is, in preferred exemplary embodiments, to set up SNMP Trap Concentrators in pairs that run on separate computing resources, such as, for example, separate servers. Such pairs of SNMP Trap Concentrators can run with one instance being primary, and the other being secondary. Each SNMP Trap Concentrator can receive all SNMP Traps. The secondary instance, for example, uses a heartbeat capability of the first instance to make sure that the primary SNMP Trap Concentrator is operational. If the secondary instance SNMP Trap concentrator senses, for example, that the primary instance is no longer available, it will assume a primary operational mode and begin actively sending to a SNMP Trap Echoer.

As well, within each high confidence network 210, 220, if network traffic and/or congestion grows significantly, one or more additional SNMP Trap Concentrators can be located on that same local network. As a result, the connected computing equipment can be reassigned such that a portion of the equipment sends its Traps to one Concentrator and a portion of the computing equipment sends its Traps to the other Concentrator. As can be seen with reference to Fig. 2, in exemplary embodiments of the present invention, the delivery of an SNMP Trap 290 to its local SNMP Trap Concentrator 211, 221 is not guaranteed. I.e., it is sent using a non-guaranteed data transmission protocol, e.g., UDP. This is because the connection travels across a high confidence network, and it is assumed that it will reach its destination. In any context where the assumptions leading to high confidence in a network are in doubt, additional Trap Concentrators can be added and the physical local network apportioned into two or more virtual local networks, each with its own respective SNMP Trap Concentrator, such that network congestion is reduced and all Traps targeted for each SNMP Trap Concentrator are assumed to arrive there with high confidence.

Once an SNMP Trap 290 has reached its destination SNMP Trap Concentrator 211, 221, the method of the present invention guarantees its delivery to its intended destination, e.g., some type of Trap processing equipment, such as is depicted in Fig. 2 as the SNMP Trap Processor 275.

Accomplishing such guaranteed delivery will next be described considering the communications link between SNMP Trap Concentrators 211, 221 and the target destinations of the SNMP Echoer 270 and ultimately the SNMP Trap processor 275.

Each SNMP Trap Concentrator 211, 221, as described above, is responsible for forwarding SNMP Traps it has received locally to one or more SNMP Trap Echoers 270. The SNMP Trap Concentrator either forwards the SNMP Traps as it receives them, or, if a communications link to the SNMP Trap Echoer 270 is not available to an SNMP Trap Echoer, then the SNMP Trap Concentrator 211, 221 stores the SNMP Traps for subsequent delivery. In either case, the SNMP Trap Concentrator bundles received SNMP Traps and sends them via a guaranteed transport protocol such as, for example, the Transport Connect Protocol or TCP.

With reference to Fig. 2, it can be seen that the SNMP Trap Concentrators 211 and 221 send their SNMP Traps bundled in TCP segments across the low confidence WAN 250 to the SNMP Trap Echoer 270. With reference to Fig. 2, the TCP links running from the SNMP Trap Concentrators 211, 221 to the WAN 250 and from the WAN 250 to the SNMP Trap Echoer 270 are labeled as 291. Once received by the SNMP Trap Echoer 270, the original Traps are unbundled and forwarded to one or more SNMP Trap processors as may be desirable according to the design and goals of the network administrators, SNMP Trap processors 275.

The link from the SNMP Trap Echoer 270 to the SNMP Trap processor in exemplary embodiments of the present invention will also be an SNMP Trap 290, although in alternative exemplary embodiments such communications could be via TCP segments as well. In general, the SNMP Trap Echoer 270 and the SNMP Trap Processor 275 will themselves be connected by a high confidence local network and thus SNMP Traps 290 are generally sufficient for such communications links.

Multiple SNMP Trap Concentrators 211, 221 may be configured to send their Traps to a single SNMP Trap Echoer 270 or in alternative exemplary embodiments to two or more SNMP Trap Echoers. Each Echoer could reissue its unbundled Traps to a single SNMP Trap processor 275, or in alternative exemplary embodiments, each Trap Echoer would reissue SNMP Traps to a unique to it SNMP Trap processor. The choice of completely centralized Trap processing as an exemplary embodiment depicted in Fig. 2, or somewhat distributed SNMP Trap processing is a function in general of network administration resources, goals, and network traffic.

The following exemplary pseudocode illustrates an exemplary implementation of an SNMP Trap Concentrator according to an embodiment of the present invention.

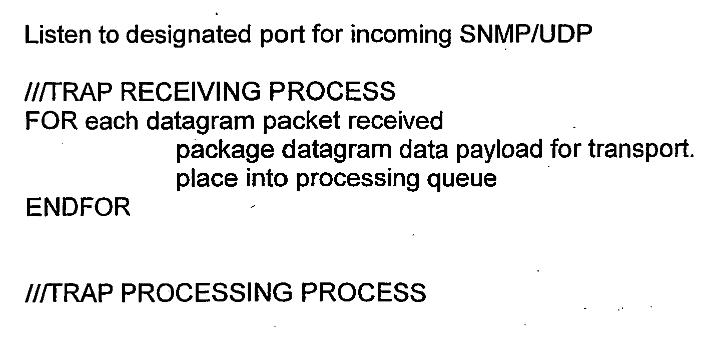

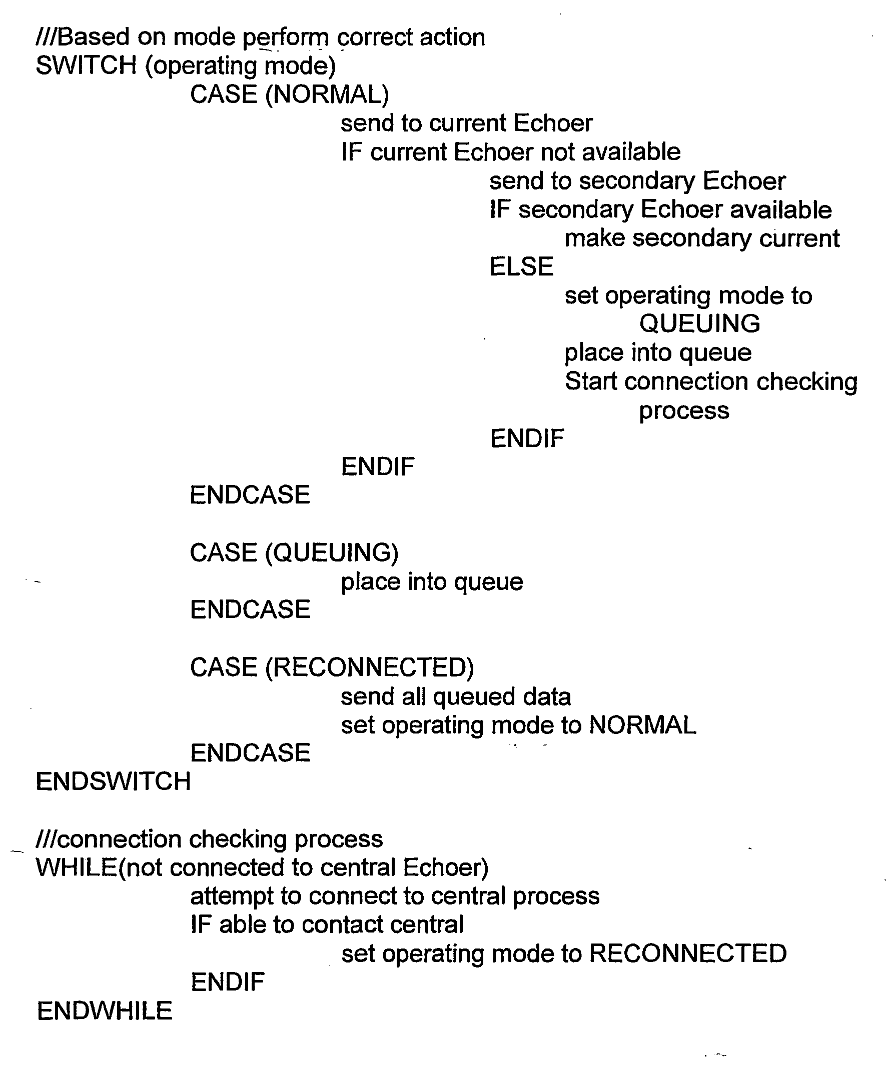

As can be seen from the description thus far, the present invention offers centralization of all SNMP Trap processing at one or more SNMP Trap processors. This reduces the amount of distributed administration that must occur to be able to process SNMP Traps in an exemplary network implementing an embodiment of the present invention. SNMP Traps need not be processed locally inasmuch as, given the methods and system of the present invention, they can be sent across long physical distances via low confidence WANs and their arrival is guaranteed nonetheless. While conventionally a Trap receiver must be provided details regarding the format of the received Traps, the present invention limits the systems that need such intimate SNMP Trap knowledge to one or more central SNMP Trap Processors.

In contrast to the present invention, conventional methods of retrofitting guaranteed delivery of network monitoring messages rely on proprietary solutions to the problem addressed herein. Such solutions are not universal, and would be complicated to implement in a centralized network administration context such as that depicted in Fig. 2 where the WAN 250 is in fact the Internet or a global spanning VPN. On the other hand, the methods and system of the present invention rely solely on standards-based transport and remote side caching when network interruptions occur.

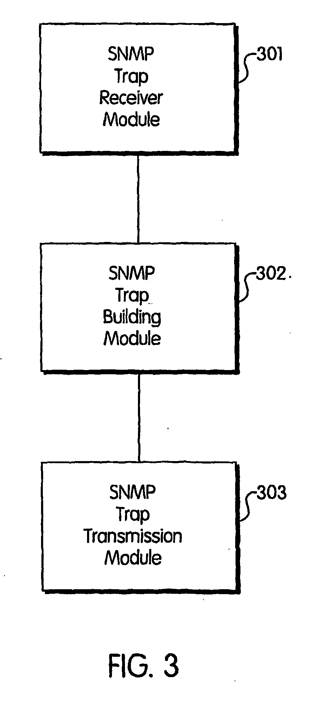

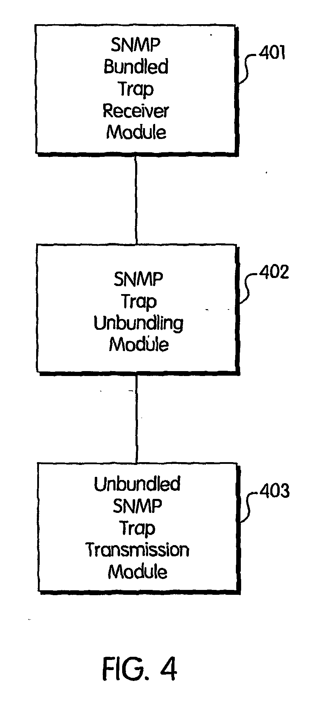

Figs. 3 and 4 depict exemplary modular software programs of instructions, which may be executed by an appropriate data processor, as is known in the art, to implement an exemplary embodiment of each of the SNMP Trap Concentrator and SNMP Trap Echoer according to an embodiment of the present invention. Each exemplary software program may be stored, for example, on a hard drive, flash memory, memory stick, optical storage medium, or other data storage devices as are now known or as may be known in the art. When one of the following exemplary programs is accessed by a CPU of an appropriate data processor and run, it performs, according to an exemplary embodiment of the present invention, the method of guaranteed delivery of SNMP Traps across a wide area network to the centralized SNMP Trap processing application.

With reference to Fig. 3, an exemplary software program has modules corresponding to two functionalities associated with an exemplary embodiment of the SNMP Trap Concentrator according to the present invention. The first module is, for example, a SNMP Trap Receiver Module 301 which can receive SNMP Traps from a variety of computing equipment commonly connected with it via a high confidence network, as described above. A second module is, for example, a SNMP Trap Bundling Module 302, which bundles the received Traps using a data transmission protocol which has a guarantee of delivery mechanism, such as, for example, TCP.

A third module is, for example, a SNMP Trap Transmission Module 303 which, using a high level language software implementation of the pseudocode described above in connection with the SNMP Trap Concentrator, attempts to send the now bundled SNMP Traps to a SNMP Trap Echoer. As described above, if there is an error sending to the Trap Echoer then the SNMP Trap Transmission Module caches the packet data until the Trap Echoer can be contacted. As well, the SNMP Trap transmission module sends Traps which have been cached in response to earlier errors in sending to a designated Trap Echoer.

With reference to Fig. 4, an exemplary software program to be run on a SNMP Trap Echoer is depicted. The exemplary software program has three modules corresponding to three functionalities associated with an exemplary embodiment of an SNMP Trap Echoer according to the present invention. The first module is, for example, a Bundled SNMP Trap Receiver Module 401, which can receive the incoming bundled Traps from a wide area network, as described above. A second module is, for example, a SNMP Trap Unbundling Module 402, which removes any framing and/or headers associated with a guaranteed delivery transmission protocol used by an SNMP Trap Concentrator to transmit the Trap, and thus reconstitutes the SNMP Trap in its original format.

A third module is, for example, an Unbundled SNMP Trap Transmission Module 403 which, using a high level language software implementation of the pseudocode described above in relation to the SNMP Trap Echoer, sends each now unbundled received Trap to a central SNMP Trap processor.

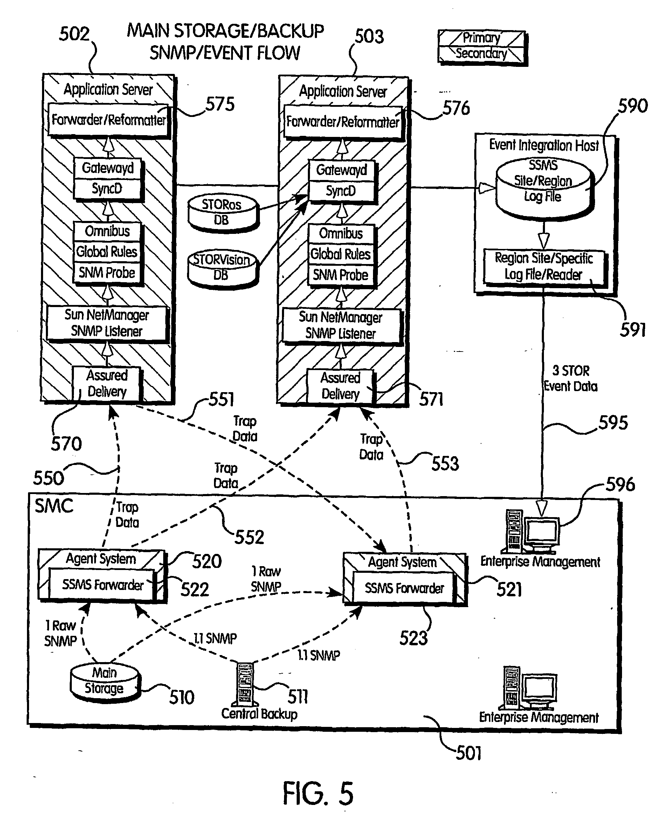

With reference to Fig. 5, an exemplary embodiment of the method and system of the present invention is illustrated, within the context of a larger application. Fig. 5 depicts an exemplary embodiment of a storage system management system which has a failover processor system to assure the delivery of monitoring data from remote service management centers to network administration processors across a WAN. Although the particular application deals with storage, that is irrelevant to the method in which it handles Trap data, which is implemented according to an exemplary embodiment of the present invention.

With reference to Fig. 5, a remote service management system 501 is depicted. Using the nomenclature of Fig. 2 above, there is a high confidence network to which a main storage device 510, a central backup storage device 511, and a pair of redundant agent systems 520, 521 are connected. The main storage device 510, as well as the central backup storage device 511 each send their Trap information to both agent system 520 as well as agent system 521, which is part of the failover system, as shall be described below. Thus, raw SNMP Traps sent as UDP messages are sent from main storage 510 and central backup 511 to each of the agent systems 520 and 521.

Within each agent system is, for example, a forwarder 522 and 523, respectively, which functions in a completely analogous fashion to the Trap Concentrator, as depicted in Figure 2, above. The SSMS Forwarders 522, 523 receive the raw SNMP Traps from elements 510, 511 and then bundle them in TCP segments for transmission along communication lines 550, 551, 552 and 553. It is noted that in this exemplary system depicted in Fig. 5, the communication lines 550 through 553 are not all utilized simultaneously.

Normally, the primary agent system 520 will send its Trap data bundled as TCP segments to the primary application server 503. Only if agent system 520 discovers that there is a failure in getting Trap data to application server 503 will it then begin to send its Trap data to the secondary application server 502. Correlatively, if agent system 520 fails, then secondary agent system 521, which, as noted above, has live and continual access to all the raw Trap data emitted by elements 510 and 511 will go on line and will then first then send Trap data to the primary application server 503. If that process fails for whatever reasons (e.g., communications, network, or failure at the application server 503 side), then secondary agent system 521 can send its Trap data to secondary application server 502. In any event, regardless of which application servers and agent systems are live, Trap data is sent bundled as TCP segments according to an embodiment of the method of the present invention to an application server 502, 503.

More precisely, the data is sent to an assured delivery component of an application server, either 570 or 571, depending on which application server is being sent the Trap data. The assured delivery components 570, 571 function completely analogously to the SNMP Trap Echoer, as depicted in Fig. 2. The short delivery components unbundle the SNMP Traps from the TCP segments and send them on to further processing, as depicted in the various components of application servers 502 and 503, whose precise function is not germane to the method of the present invention and need not be described in greater detail. Ultimately, the analogous processing of the Trap processor of Fig. 2 is shared in this exemplary system by the Forwarder Reformatter 575 and 576 at each application server. An additional part of the Trap processing is accomplished by the SSMS Site/Region Log File 590 and the RegionSite/Specific LogFile Reader 591.

Eventually, the data contained in the original Traps is communicated across a wide area network hop 595 to Enterprise Management 596, which can take action in accordance with the Trap data it receives. Exemplary SNMP Trap messages originating out of main storage component 510 would be, for example, a power outage or other equipment failure. Exemplary Trap messages emitting out of central backup 511 would be, for example, inability to backup or some type of signaling problems. As described above, the content of SNMP Traps and what and when they report such events are arbitrary and are in general a function of network administration goals and events which require remote monitoring.

Modifications and substitutions by one of ordinary skill in the art are considered to be within the scope of the present invention which is not to be limited except by the claims that follow.

## Claims

1. A method of guaranteeing the delivery of SNMP traps in a network, (210, 220, 250) comprising:
receiving at least two SNMP traps (290) at a trap concentrator (211, 221, 522, 523);
**characterised in that** the method further includes bundling the SNMP traps (290) using a guaranteed delivery data transmission protocol;
transmitting the bundled traps to a trap echoer (270); and
unbundling the traps and transmitting their data content to a trap processor (275).

2. The method of claim 1, wherein the trap echoer (270) and the trap processor (275) are colocated.

3. The method of claim 1, wherein the guaranteed delivery data transmission protocol is TCP.

4. The method of claim 1, wherein the trap concentrator (211, 221, 522, 523) is connected to trap originators via a high confidence LAN (210, 221, 522, 523).

5. The method of claim 1, wherein if transmission of a bundled trap by the trap concentrator (211, 221, 522, 523) fails, the trap concentrator (211, 221, 522, 523) caches the bundled trap and resends the bundled trap at a later time.

6. The method of claim 1, wherein the traps (290) are sent from the trap echoer (270) to the trap processor (275) using a guaranteed delivery data transmission protocol.

7. The method of claim 1, where for each message received by the trap concentrator (211, 221, 522, 523), the message is packaged for transport and placed in a processing queue.

8. The method of claim 7, wherein:
if a current trap echoer (270) is available, the message is sent to a current trap echoer (270); if the current trap echoer (270) is not available, the message is sent to a secondary trap echoer (270); and
if no trap echoer is available, the message is placed in a queue.

9. The method of claim 1, wherein SNMP traps (290) are received at a primary trap concentrator (211, 221, 522, 523) and at a secondary trap concentrator (211, 221, 522, 523);
wherein the secondary trap concentrator (211, 221, 522, 523) continually monitors the primary SNMP trap concentrator (211, 221, 522, 523) to ensure it is in an operational state; and
wherein if the secondary trap concentrator (211, 221, 522, 523) senses that the primary trap concentrator (211, 221, 522, 523) is not in the operational state, the secondary trap concentrator (211, 221, 522, 523) actively sends SNMP traps (290) to the trap echoer (270).

10. A system for guaranteeing the transmission of monitoring messages (290) across a network to a monitoring application, comprising:
a monitoring message concentrator (211, 221, 522, 523) which is connected to and receives monitoring messages from (290) computing equipment (201, 202, 203, 204, 205, 206) **characterised in that**, the monitoring message concentrator (211, 221, 522, 523) transmitting received messages (290) across a network (210, 220, 250) to a message echoer (270) using a standards-based guaranteed delivery data transmission protocol;
a monitoring message echoer (270) coupled to the monitoring message concentrator (211, 221, 522, 523) which receives the transmitted messages (290) and further transmits the data content of the messages (290) to a monitoring message processor (275); and
a monitoring message processor (275) coupled to the monitoring message echoer (270) which implements a monitoring application.

11. The system of claim 10, further comprising a second monitoring message concentrator (211, 221, 522, 523) redundantly coupled with the first monitoring message concentrator (211, 221, 522. 523) to provide redundancy protection for the first monitoring message concentrator (211, 221, 522, 523),

12. The system of claim 10, where the standards-based guaranteed delivery data transmission protocol is TCP.

13. The system of claim 10, wherein the monitoring messages (290) from computing equipment (201, 202, 203, 204, 205, 206) are sent from the computing equipment using a standards-based data transmission protocol without guaranteed delivery.

14. The system of claim 10, where the monitoring messages (290) from computing equipment (201, 202, 203, 204, 205, 206) are sent from the computing equipment as SNMP traps (290).

15. A computer program product comprising a computer usable medium having computer readable program code means embodied therein, the computer readable program code means in said computer program product comprising means for causing a computer to:
receive at least two SNMP traps (290) at a trap concentrator (211, 221, 522, 523), **characterised in that** the computer is caused to bundle the SNMP (290) traps using a guaranteed delivery data transmission protocol;
transmit the bundled traps to a trap echoer (270); and
unbundle the traps and transmit their data content to a trap processor (275).

16. The computer program product of claim 15, wherein the guaranteed delivery data transmission protocol is TCP, and where if transmission of a bundled trap by the concentrator (211, 221, 522, 523) fails, the trap concentrator (211, 221, 522, 523) caches the bundled trap and resends the bundled trap at a later time

17. The computer program product of claim 15, wherein if a current trap echoer (270) is available, the message (290) is sent to the current trap echoer (270); and
if a current trap echoer is not available, the message is sent to a secondary trap echoer (270); and
if no trap echoer is available, the message is placed in a queue.

18. A program storage device readable by a machine, tangibly embodying a program of instructions executable by the machine to perform a method of guaranteeing the delivery of SNMP traps (290) in a network (210, 220, 250), said method comprising:
receiving at least two SNMP traps (290) at a trap concentrator (211, 221, 522, 523) **characterised by**;
bundling the SNMP traps (290) using a guaranteed delivery data transmission protocol; and transmitting the bundled traps to a trap echoer;(270) and
unbundling the traps and transmitting their data content to a trap processor (275).

19. The program storage device of claim 18, where the guaranteed delivery data transmission protocol is TCP, and where if transmission of a bundled trap (290) by the concentrator (211, 221, 522, 523) fails, the trap concentrator caches the bundled trap and resends the bundled trap at a later time.

20. A method according to Claim 1, further **characterized by** receiving at least two monitoring messages (290) at a message concentration (211, 221, 522, 523);
bundling the monitoring messages (290) using a guaranteed delivery data transmission protocol;
transmitting the bundled monitoring messages to a message echoer (270); and
unbundling the monitoring messages and transmitting their data content to a monitoring message processor (275).

## Patentansprüche

1. Verfahren zum Garantieren der Lieferung von SNMP-Traps in einem Netz (210, 220, 250), welches umfasst:
das Empfangen von zumindest zwei SNMP-Traps (290) bei einem Trap-Konzentrator (211, 221, 522, 523);
**dadurch gekennzeichnet, dass** das Verfahren weiter umfasst, das Bündeln der SNMP-Traps (290) unter Anwendung eines Datenübertragungsprotokolls für eine garantierte Lieferung;
das Übertragen der gebündelten Traps zu einem Trap-Echomittel (270); und
das Entbündeln der Traps und das Übertragen ihres Dateninhalts in einen Trap-Prozessor (275).

2. Verfahren gemäß Anspruch 1, wobei das Trap-Echomittel (270) und der Trap-Prozessor (275) zusammengestellt sind.

3. Verfahren gemäß Anspruch 1, wobei das Datenübertragungsprotokoll für eine garantierte Lieferung TCP ist.

4. Verfahren gemäß Anspruch 1, wobei der Trap-Konzentrator (211, 221, 522, 523) mit Trap-Absendern über ein High-Confidence-LAN (210, 221, 522, 523) verbunden ist.

5. Verfahren gemäß Anspruch 1, wobei, sofern die Übertragung eines gebündelten Traps durch den Trap-Konzentrator (211, 221, 522, 523) nicht zustande kommt, der Trap-Konzentrator (211, 221, 522, 523) den gebündelten Trap in einem Cache-Speicher speichert und zu einem späteren Zeitpunkt den gebündelten Trap erneut sendet.

6. Verfahren gemäß Anspruch 1, wobei die Traps (290) von dem Trap-Echomittel (270) zu dem Trap-Prozessor (275) unter Anwendung eines Datenübertragungsprotokolls für eine garantierte Lieferung gesandt werden.

7. Verfahren gemäß Anspruch 1, wobei für jede von dem Trap- Konzentrator (211, 221, 522, 523) empfangene Nachricht die Nachricht für den Transport gepackt wird, und in einer Verarbeitungswarteschlange platziert wird.

8. Verfahren gemäß Anspruch 7, wobei:
sofern ein laufendes Trap-Echomittel (270) verfügbar ist, die Nachricht zu einem laufenden Trap-Echomittel (270) gesandt wird; sofern ein laufendes Trap-Echomittel (270) nicht verfügbar ist, die Nachricht zu einem Sekundär-Trap-Echomittel (270) gesandt wird; und
sofern kein Trap-Echomittel verfügbar ist, die Nachricht in einer Warteschlange platziert wird.

9. Verfahren gemäß Anspruch 1, wobei SNMP-Traps (290) bei einem Primär-Trap-Konzentrator (211, 221, 522, 523) empfangen werden und bei einem Sekundär-Trap-Konzentrator (211, 221, 522, 523);
wobei der Sekundär-Trap-Konzentrator (211, 221, 522, 523) kontinuierlich den Primär-SNMP-Trap-Konzentrator (211, 221, 522, 523) überwacht, um sicherzustellen, dass er sich in einem Betriebszustand befindet; und
wobei, sofern der Sekundär-Trap-Konzentrator (211, 221, 522, 523) erkennt, dass der Primär-Trap-Konzentrator (211, 221, 522, 523) sich nicht in dem Betriebszustand befindet, der Sekundär-Trap-Konzentrator (211, 221, 522, 523) aktiv SNMP-Traps (290) zu dem Trap-Echomittel (270) sendet.

10. System zum Garantieren der Übertragung von Überwachungsnachrichten (290) über ein Netz zu einer Überwachungsanwendung, welches umfasst:
einen Überwachungsnachrichtkonzentrator (211, 221, 522, 523), welcher mit der Computeranlage (201, 202, 203, 204, 205, 206) verbunden ist, und Überwachungsnachrichten (290) von ihr empfängt, **dadurch gekennzeichnet, dass** der Überwachungsnachrichtkonzentrator (211, 221, 522, 523) die empfangenen Nachrichten (290) über ein Netz (210, 220, 250) zu einem Echomittel (270) unter Anwendung eines auf Standards basierten Datenübertragungsprotokolls für eine garantierte Lieferung überträgt;
ein Überwachungsnachrichtechomittel (270), gekoppelt mit dem Überwachungsnachrichtkonzentrator (211, 221, 522, 523), welches die übertragenen Nachrichten (290) empfängt, und den Dateninhalt der Nachrichten (290) zu einem Überwachungsnachrichtprozessor (275) weiter überträgt; und
einen Überwachungsnachrichtprozessor (275), gekoppelt mit dem Überwachungsnachrichtechomittel (270), welcher eine Überwachungsanwendung implementiert.

11. System gemäß Anspruch 10, welches weiter einen Sekundär-Überwachungsnachrichtkonzentrator (211, 221, 522, 523) umfasst, redundant gekoppelt mit dem ersten Überwachungsnachrichtkonzentrator (211, 221, 522, 523), um einen Redundanzschutz für den ersten Überwachungsnachrichtkonzentrator (211, 221, 522, 523) zu schaffen.

12. System gemäß Anspruch 10, wobei das auf Standards basierte Datenübertragungsprotokoll für eine garantierte Lieferung TCP ist.

13. System gemäß Anspruch 10, wobei die Überwachungsnachrichten (290) von der Computeranlage (201, 202, 203, 204, 205, 206) von der Computeranlage unter Anwendung eines auf Standards basierten Datenübertragungsprotokolls ohne garantierte Lieferung versandt werden.

14. System gemäß Anspruch 10, wobei die Überwachungsnachrichten (290) von der Computeranlage (201, 202, 203, 204, 205, 206) von der Computeranlage als SNMP-Traps (290) versandt werden.

15. Computerprogrammprodukt, welches ein Computernutzbares Medium mit einem darin enthaltenen Computerlesbaren Programmkodemittel umfasst, wobei das Computerlesbare Programmkodemittel als Bestandteil des Computerprogrammprodukts ein Mittel umfasst, um zu bewirken, dass ein Computer:
zumindest zwei SNMP-Traps (290) bei einem Trap-Konzentrator (211, 221, 522, 523) empfängt, **dadurch gekennzeichnet, dass** der Computer derart gesteuert wird, dass er die SNMP-Traps (290) unter Anwendung eines Datenübertragungsprotokolls für eine garantierte Lieferung bündelt;
die gebündelten Traps zu einem Trap-Echomittel (270) überträgt; und
die Traps entbündelt, und ihren Dateninhalt zu einem Trap-Prozessor (275) überträgt.

16. Computerprogrammprodukt gemäß Anspruch 15, wobei das Datenübertragungsprotokoll für eine garantierte Lieferung TCP ist, und wobei, sofern die Übertragung eines gebündelten Traps durch den Konzentrator (211, 221, 522, 523) nicht zustande kommt, der Trap-Konzentrator (211, 221, 522, 523) in einem Cache-Speicher den gebündelten Trap speichert, und zu einem späteren Zeitpunkt den gebündelten Trap erneut sendet.

17. Computerprogrammprodukt gemäß Anspruch 15, wobei, sofern ein laufendes Trap-Echomittel (270) verfügbar ist, die Nachricht (290) zu dem laufenden Trap-Echomittel (270) gesandt wird; und,
sofern ein laufendes Trap-Echomittel nicht verfügbar ist, die Nachricht zu einem Sekundär-Trap-Echomittel (270) gesandt wird; und,
sofern kein Trap-Echomittel verfügbar ist, die Nachricht in einer Warteschlange platziert wird.

18. Maschinen-lesbare Programmspeichereinrichtung, welche erfassbar ein maschinen-ausführbares Steüerprogramm lädt, um ein Verfahren zum Garantieren der Lieferung von SNMP-Traps (290) in einem Netz (210, 220, 250) auszuführen, wobei das Verfahren umfasst:
das Empfangen von zumindest zwei SNMP-Traps (290) bei einem Trap-Konzentrator (211, 221, 522, 523),
**gekennzeichnet durch**:
das Bündeln der SNMP-Traps (290) unter Anwendung eines Datenübertragungsprotokolls für eine garantierte Lieferung; und das Übertragen der gebündelten Traps zu einem Trap-Echomittel (270); und
das Entbündeln der Traps, und das Übertragen ihres Dateninhalts zu einem Trap-Prozessor (275).

19. Programmspeichereinrichtung gemäß Anspruch 18, wobei das Datenübertragungsprotokoll für eine garantierte Lieferung TCP ist, und wobei, sofern die Übertragung eines gebündelten Traps (290) durch den Konzentrator (211, 221, 522, 523) nicht zustande kommt, der Trap-Konzentrator den gebündelten Trap in einem Cache-Speicher speichert und zu einem späteren Zeitpunkt den gebündelten Trap erneut sendet.

20. Verfahren gemäß Anspruch 1, weiter **gekennzeichnet durch**:
das Empfangen von zumindest zwei Überwachungsnachrichten (290) bei einer Nachrichtkonzentration (211, 221, 522, 523);
das Bündeln der Überwachungsnachrichten (290) unter Anwendung eines Datenübertragungsprotokolls für eine garantierte Lieferung;
das Übertragen der gebündelten Überwachungsnachrichten zu einem Nachrichtechomittel (270); und
das Entbündeln der Überwachungsnachrichten, und das Übertragen ihres Dateninhalts zu einem Überwachungsnachrichtprozessor (275).

## Revendications

1. Procédé destiné à garantir la livraison d'interruptions de protocole SNMP sur un réseau (210, 220, 250) **caractérisé en ce qu'**il comprend :
la réception d'au moins deux interruptions de protocole SNMP (290) au niveau d'un concentrateur d'interruptions (211, 221, 522, 523) ;
**caractérisé en ce que** le procédé comporte en outre le groupement des interruptions de protocole SNMP (290) au moyen d'un protocole de transmission de données de livraison garantie ;
la transmission des interruptions groupées à un dispositif d'écho d'interruptions (270) ; et
le dégroupement des interruptions ainsi que la transmission de leur contenu de données à un processeur d'interruptions (275).

2. Procédé selon la revendication 1, dans lequel le dispositif d'écho d'interruptions (270) et le processeur d'interruptions (275) sont colocalisés.

3. Procédé selon la revendication 1, dans lequel le protocole de transmission de données de livraison garantie est le protocole TCP.

4. Procédé selon la revendication 1, dans lequel le concentrateur d'interruptions (211, 221, 522, 523) est connecté à des expéditeurs d'interruptions via un réseau LAN à haut degré de confiance (210, 221, 522, 523).

5. Procédé selon la revendication 1, dans lequel si la transmission d'interruptions groupées par le concentrateur d'interruptions (211, 221, 522, 523) échoue, le concentrateur d'interruptions (211, 221, 522, 523) met en mémoire cache les interruptions groupées et renvoie les interruptions groupées ultérieurement.

6. Procédé selon la revendication 1, dans lequel les interruptions (290) sont envoyées à partir du dispositif d'écho d'interruptions (270) vers le processeur d'interruptions (275) au moyen d'un protocole de transmission de données de livraison garantie.

7. Procédé selon la revendication 1, dans lequel pour chaque message reçu par le concentrateur d'interruptions (211, 221, 522, 523), le message est emballé pour le transport et placé dans une file d'attente de traitement.

8. Procédé selon la revendication 7, dans lequel :
si un dispositif d'écho d'interruptions (270) en cours est disponible, le message est envoyé à un dispositif d'écho d'interruptions (270) en cours ; si le dispositif d'écho d'interruptions (270) en cours n'est pas disponible, le message est envoyé à un dispositif d'écho d'interruptions (270) secondaire ; et
si aucun dispositif d'écho d'interruptions n'est disponible, le message est placé dans une file d'attente de traitement.

9. Procédé selon la revendication 1, dans lequel les interruptions de protocole SNMP (290) sont reçues au niveau d'un concentrateur d'interruptions (211, 221, 522, 523) primaire et au niveau d'un concentrateur d'interruptions (211, 221, 522, 523) secondaire ;
dans lequel le concentrateur d'interruptions (211, 221, 522, 523) secondaire surveille continuellement le concentrateur d'interruptions de protocole SNMP (211, 221, 522, 523) primaire afin de s'assurer qu'il est en état de fonctionnement ; et
dans lequel si le concentrateur d'interruptions (211, 221, 522, 523) secondaire détecte que le concentrateur d'interruptions (211, 221, 522, 523) primaire n'est pas en état de fonctionnement, le concentrateur d'interruptions (211, 221, 522, 523) secondaire envoie activement les interruptions de protocole SNMP (290) au dispositif d'écho d'interruptions (270).

10. Système destiné à garantir la transmission de messages de surveillance (290) à travers un réseau vers une application de surveillance, comprenant :
un concentrateur de messages de surveillance (211, 221, 522, 523) qui est connecté à et reçoit des messages de surveillance en provenant d'un équipement informatique de (290) (201, 202, 203, 204, 205, 206) dans lequel le concentrateur de messages de surveillance (211, 221, 522, 523) transmet les messages reçus (290) à travers un réseau (210, 220, 250) à un dispositif d'écho de messages (270) au moyen d'un protocole de transmission de données de livraison garantie basé sur des standards ;
un dispositif d'écho de messages de surveillance (270) couplé au concentrateur de messages de surveillance (211, 221, 522, 523) qui reçoit les messages transmis (290) et transmets en outre le contenu de données des messages (290) à un processeur de messages de surveillance (275) ; et
un processeur de messages de surveillance (275) couplé au dispositif d'écho de messages de surveillance (270) qui implémente une application de surveillance.

11. Système selon la revendication 10, comprenant en outre un second concentrateur de messages de surveillance (211, 221, 522, 523) couplé de manière redondante au premier concentrateur de messages de surveillance (211, 221, 522, 523) afin de fournir une protection par redondance au premier concentrateur de messages de surveillance (211, 221, 522, 523).

12. Système selon la revendication 10, dans lequel le protocole de transmission de données de livraison garantie basé sur des standards est le protocole TCP.

13. Système selon la revendication 10, dans lequel les messages de surveillance (290) en provenance de l'équipement informatique (201, 202, 203, 204, 205, 206) sont envoyés à partir de l'équipement informatique au moyen d'un protocole de transmission de données basé sur des standards sans livraison garantie.

14. Système selon la revendication 10, dans lequel les messages de surveillance (290) en provenance de l'équipement informatique (201, 202, 203, 204, 205, 206) sont envoyés à partir de l'équipement informatique en tant qu'interruptions de protocole SNMP (290).

15. Produit de programme informatique comprenant un support exploitable par machine ayant des moyens de code de programme lisibles par machine incorporés dans celui-ci, les moyens de code de programme lisibles par machine dans ledit produit de programme informatique comprenant des moyens destinés à permettre à un ordinateur de :
recevoir au moins deux interruptions de protocole SNMP (290) au niveau d'un concentrateur d'interruptions (211, 221, 522, 523), **caractérisé en ce que** l'ordinateur groupe des interruptions de protocole SNMP (290) au moyen d'un protocole de transmission de données de livraison garantie ;
transmet les interruptions groupées à un dispositif d'écho d'interruptions (270) ; et
dégroupe les interruptions et transmettre leur contenu de données à un processeur d'interruptions (275).

16. Produit de programme informatique selon la revendication 15, dans lequel le protocole de transmission de données de livraison garantie est le protocole TCP, et dans lequel si la transmission d'interruptions groupées par le concentrateur (211, 221, 522, 523) échoue, le concentrateur d'interruptions (211, 221, 522, 523) met en mémoire cache les interruptions groupées et renvoie les interruptions groupées ultérieurement.

17. Produit de programme informatique selon la revendication 15, dans lequel si un dispositif d'écho d'interruptions (270) en cours est disponible, le message (290) est envoyé au dispositif d'écho d'interruptions (270) en cours ; et
si un dispositif d'écho d'interruptions en cours n'est pas disponible, le message est envoyé à un dispositif d'écho d'interruptions (270) secondaire ; et
si aucun dispositif d'écho d'interruptions n'est disponible, le message est placé dans une file d'attente.

18. Dispositif de stockage de programme lisible par une machine, incorporant tangiblement un programme d'instructions exécutable par la machine afin de réaliser un procédé destiné à garantir la livraison d'interruptions de protocole SNMP (290) sur un réseau (210, 220, 250), ledit procédé comprenant :
la réception d'au moins deux interruptions de protocole SNMP (290) au niveau d'un concentrateur d'interruptions (211, 221, 522, 523) **caractérisé par** :
le groupement des interruptions de protocole SNMP (290) au moyen d'un protocole de transmission de données de livraison garantie ; et la transmission des interruptions groupées à un dispositif d'écho d'interruptions (270) ; et
le dégroupement des interruptions ainsi que la transmission de leur contenu de données à un processeur d'interruptions (275).

19. Dispositif de stockage de programme selon la revendication 18, dans lequel le protocole de transmission de données de livraison garantie est le protocole TCP, et dans lequel si la transmission d'interruptions groupées (290) par le concentrateur (211, 221, 522, 523) échoue, le concentrateur d'interruptions met en mémoire cache les interruptions groupées et renvoie les interruptions groupées ultérieurement.

20. Procédé selon la revendication 1, **caractérisé en outre par** la réception d'au moins deux messages de surveillance (290) au niveau d'un concentrateur de messages (211, 221, 522, 523) ;
le groupement des messages de surveillance (290) au moyen d'un protocole de transmission de données de livraison garantie ;
la transmission des messages de surveillance groupés à un dispositif d'écho de messages (270) ; et
le dégroupement des messages de surveillance ainsi que la transmission de leur contenu de données à un processeur de messages de surveillance (275).
